# EUROPEAN PATENT APPLICATION

(11) **EP 4 814 372 A1**
(43) Date of publication of application: **30.09.2026**
(21) Application number: 24893589.2
(22) Date of filing: 22.11.2024
(51) Int. Cl.: F21V 8/00, F21V 19/00

(54) **LAMP**

(30) Priority: 23.11.2023 CN 202323178507 U
(71) Applicant: Opple Lighting Co., Ltd., Shanghai 201201 (CN); Suzhou Opple Lighting Co., Ltd., Suzhou, Jiangsu 215211 (CN)
(72) Inventor: LIU, Haisheng, Shanghai 200120 (CN); LIU, Chaobo, Shanghai 200120 (CN); HU, Haiqiang, Shanghai 200120 (CN); YANG, Xiaotong, Shanghai 200120 (CN); LIU, Zheng, Shanghai 200120 (CN)
(74) Representative: Winter, Brandl - Partnerschaft mbB
(86) International application number: PCT/CN2024/133852
(87) International publication number: WO 2025/108435

(57) **Abstract**

A lamp (100), comprising: a housing (600), the housing (600) comprising a bottom wall (610) and a frame (620) extending from the bottom wall (610) in a direction away from the bottom wall (610), and a light outlet being formed between the bottom wall (610) and the frame (620); and a surface light-emitting device (200), which is provided on the bottom wall (610) and surrounded by the frame (620) and has a first light-exiting surface (201) provided at the light outlet, wherein the surface light-emitting device (200) comprises a first light-emitting module (210), light emitted from the first light-emitting module (210) is emitted out via the first light-exiting surface (201), the side of the first light-exiting surface (201) facing the light outlet is a mirror surface, and the first light-exiting surface (201) is configured to emit light outwards and reflect light.

## Description

The present application claims the priority of Chinese Patent Application No. 2024115067953, filed on October 25, 2024, and title of invention "LAMP", the entire content of which is incorporated herein by reference.

### TECHNICAL FIELD

The present application relates to the field of lighting, in particular to a lamp.

### BACKGROUND

With the improvement of living standards, people have increasingly higher demands for lighting in different scenarios. Among them, lamps capable of simulating outdoor natural ambient light have gradually gained market favor and are widely used in indoor lighting for homes, office buildings, shopping malls, stadiums, stations, airports, etc. Traditional sky lamps generally consist of a light source and a pattern plate printed with blue sky and white clouds. The pattern plate is illuminated by the light source to create an outdoor blue sky lighting environment. However, this solution fails to realistically present the matching effect between blue sky and sunlight, featuring poor layering, lack of three-dimensionality, and low simulation fidelity.

In response to this, sky lamp designs combining light sources with scattering panels have emerged on the market to create light similar to natural sunlight. Nevertheless, the single light source fails to reflect light changes, resulting in unsatisfactory effects.

In view of the above, it is indeed necessary to provide a lamp that can realistically simulate the effect of natural light.

### SUMMARY

The purpose of the present application is to provide a lamp capable of simulating the real scene of sunlight shining into a room through a window.

To achieve the above purpose, the present application provides a lamp, including:
a housing, including a bottom wall and a frame extending from the bottom wall in a direction away from the bottom wall, a light outlet being formed between the bottom wall and the frame;
a surface light-emitting device, disposed on the bottom wall and surrounded by the frame, having a first light-exiting surface arranged at the light outlet; in which the surface light-emitting device includes a first light-emitting module, and light emitted by the first light-emitting module is emitted through the first light-exiting surface, a side of the first light-exiting surface facing the light outlet is a mirror surface, and the first light-exiting surface is configured to emit light outward and reflect light.

Optionally, the lamp further has a second light-exiting surface surrounding the first light-exiting surface and located inside the frame, and the second light-exiting surface is configured to emit light outward and/or reflect light emitted by the first light-exiting surface.

Optionally, the light emitted and/or reflected by the second light-exiting surface is at least partially projected onto the mirror surface, forming a virtual image matching the shape of the second light-exiting surface in the mirror surface.

Optionally, the lamp further includes a side light-emitting device surrounding the surface light-emitting device, the side light-emitting device extends along a light emission direction of the first light-emitting module; the side light-emitting device includes a second light-emitting module and the second light-exiting surface surrounding the first light-exiting surface and located inside the frame, light emitted by the second light-emitting module is emitted in a direction away from the frame after passing through the second light-exiting surface, with a part of the light irradiating the mirror surface.

Optionally, the side light-emitting device further includes a light-emitting member disposed between the second light-emitting module and the first light-exiting surface and surrounding the first light-exiting surface; a side of the light-emitting member facing the first light-exiting surface has a white diffuse reflection surface to enhance the visibility of the virtual image.

Optionally, the surface light-emitting device includes a transparent plate located on a side of the first light-emitting module away from the bottom wall, and the mirror surface is located on a side of the transparent plate away from the first light-emitting module.

Optionally, the transparent plate is made of any one of PMMA, PC or glass; the mirror surface on the transparent plate is formed by a unidirectional film layer attached to the transparent plate, and the unidirectional film layer is made of tin, silver or aluminum; a light reflectivity of the mirror surface is higher than a light transmittance of the mirror surface.

Optionally, the lamp further includes a non-light-exiting surface adjacent to the second light-exiting surface, and the non-light-exiting surface and the second light-exiting surface are arranged circumferentially around the first light-exiting surface.

Optionally, the lamp further includes a side projection device disposed between the frame and the surface light-emitting device, and the side projection device is configured to project a sun-like light spot onto the mirror surface.

Optionally, the lamp further includes at least one reflection device located in a light emission direction of the side projection device; the sun-like light spot projected by the side projection device is reflected by the reflection device and then enters the mirror surface.

Compared with the prior art, the technical solution of the present application has the following beneficial effects: the surface light-emitting device of the lamp of the present application can simulate effects such as blue sky, sunset, morning light, and blue sky with white clouds. Meanwhile, a mirror surface is arranged on the first light-exiting surface of the surface light-emitting device, enabling the first light-exiting surface to reflect external light, making the lamp have a greater sense of depth and further enhancing the user's visual experience.

### BRIEF DESCRIPTION OF DRAWINGS

Fig. 1 is a three-dimensional structural view of a lamp according to an embodiment of the present application.
Fig. 2 is a sectional view of the lamp shown in Fig. 1.
Fig. 3 is an exploded structural view of the lamp shown in Fig. 1.
Fig. 4 is a plan schematic view of the first light-emitting module in the lamp shown in Fig. 3.
Fig. 5 is a schematic view of a light-emitting module in the first light-emitting module shown in Fig. 3.
Fig. 6 is a schematic view of the second light-emitting module shown in Fig. 3.
Fig. 7 is an exploded structural view of a side light-emitting device according to a second embodiment of the present application.
Fig. 8 is a schematic view of the second light-emitting module in Fig. 7.
Fig. 9 is an exploded structural view of a light distribution member of a side light-emitting device according to a third embodiment of the present application.
Fig. 10 is a three-dimensional structural view of a projection device according to an embodiment of the present application.
Fig. 11 is an exploded structural view of the projection device shown in Fig. 10.
Fig. 12 is an optical path diagram of a side projection device according to an embodiment of the present application.
Fig. 13 is a lighting effect diagram of a lamp according to a preferred embodiment of the present application.
Fig. 14 is a lighting effect diagram of a surface light-emitting device and a side light-emitting device of a lamp according to a preferred embodiment of the present application.

### Reference Signs:

100 - Lamp;
200 - Surface light-emitting device, 201 - First light-exiting surface, 210 - First light-emitting module, 211 - First substrate, 212 - Light-emitting module, 2121 - First light-emitting unit, 2122 - Second light-emitting unit, 220 - Diffusion structure, 240 - Transparent plate, 250 - Inner frame;
300 - Side light-emitting device, 301 - Second light-exiting surface, 302 - Non-light-exiting surface, 303 - Virtual image, 304 - Light/shadow transition zone, 310 - Second light-emitting module, 311 - Second substrate, 312 - Light-emitting element, 320 - Light guide assembly, 321 - Light-emitting member, 322 - Light distribution member, 3221 - V-prism micro-structure, 323 - Reflection member, 324 - Light shielding member, 325 - Annular lens;
400 - Projection system, 410 - Projection device, 420 - Light-emitting assembly, 421 - Aluminum substrate, 422 - Lamp bead, 430 - Lens module, 431 - First lens, 432 - Second lens, 433 - Third lens, 451 - First lens barrel, 452 - Second lens barrel, 453 - Third lens barrel, 440 - Diaphragm;
500 - Mounting system;
600 - Housing, 610 - Bottom wall, 620 - Frame.

### DETAILED DESCRIPTION

To make the purposes, technical solutions and advantages of the present application clearer, the present application will be described in detail below with reference to the accompanying drawings and specific embodiments.

Herein, it should be noted that to avoid obscuring the present application with unnecessary details, only structures and/or processing steps closely related to the solutions of the present application are shown in the drawings, while other details not closely related to the present application are omitted.

In addition, it should be noted that the terms "comprise", "include" or any other variation thereof are intended to cover a non-exclusive inclusion, such that a process, method, article or device that comprises a list of elements includes not only those elements but also other elements not explicitly listed, or elements inherent to such process, method, article or device.

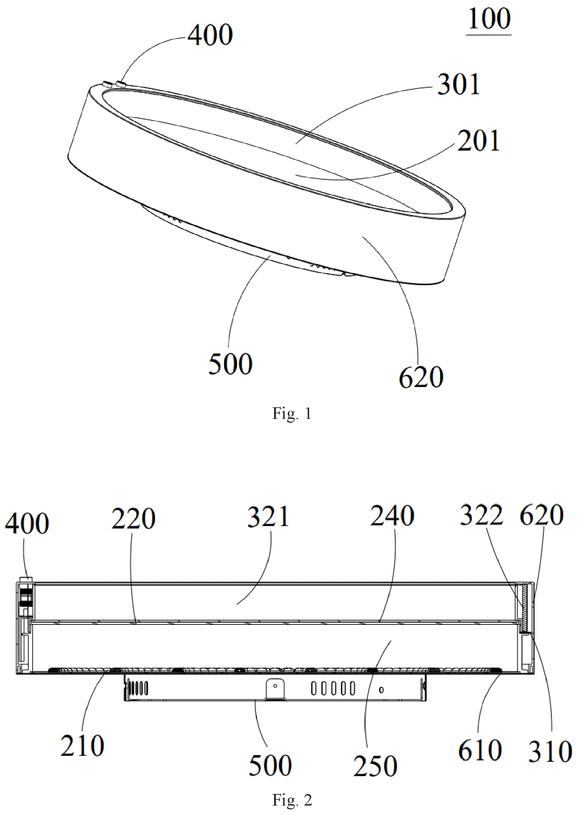

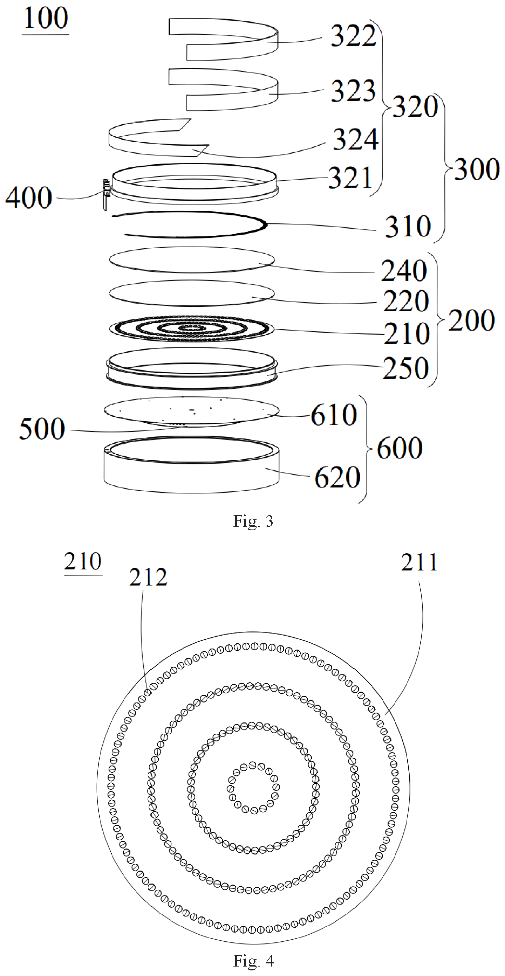

Referring to Figs. 1-3, a lamp 100 according to a preferred embodiment of the present application includes a surface light-emitting device 200, a side light-emitting device 300 and a projection system 400. The surface light-emitting device 200 is configured to simulate sunlight at different times in nature. The side light-emitting device 300 is arranged around the outer side of the surface light-emitting device 200 and configured to simulate the effect of sunlight irradiating the edge of a skylight. In addition, the side light-emitting device 300 can form a virtual image 303 in the surface light-emitting device 200. The projection system 400 is arranged on the side of the side light-emitting device 300 and configured to project light spots on the ground or wall.

The lamp 100 includes a housing 600. The housing 600 includes a bottom wall 610 and a frame 620 extending from the bottom wall 610 in a direction away from the bottom wall 610. A light outlet is formed between the bottom wall 610 and the frame 620. A first light-exiting surface 201 of the surface light-emitting device 200 is arranged at the light outlet. The surface light-emitting device 200 includes a first light-emitting module 210 and a diffusion structure 220. The first light-emitting module 210 is fixedly connected to the bottom wall 610 and configured to emit light to the diffusion structure 220. The diffusion structure 220 is installed in the frame 620 and covers the first light-emitting module 210. The diffusion structure 220 is configured to homogenize the light emitted by the first light-emitting module 210.

In an optional embodiment, the surface light-emitting device 200 is a ceiling lamp, including a chassis, a face mask and the first light-emitting module 210. The first light-emitting module 210 is a full-spectrum LED chip capable of simulating the sunlight spectrum. In other embodiments, the first light-emitting module 210 may also be a conventional white light source. By adding nanoparticles into the diffusion structure 220 of the surface light-emitting device 200 to generate Rayleigh scattering, the first light-exiting surface 201 presents a blue color like the sky. The present application does not limit thereto.

Referring to Figs. 2-5, in a preferred embodiment of the present application, the surface light-emitting device 200 includes a first light-emitting module 210 and a diffusion structure 220. The first light-emitting module 210 includes a first substrate 211 and a plurality of light-emitting modules 212. The first substrate 211 is fixedly connected to the bottom wall 610. The light-emitting modules 212 are installed on a side of the first substrate 211 away from the bottom wall 610 and electrically connected through the first substrate 211.

The light-emitting module 212 includes at least two types of light-emitting units capable of emitting light of at least two spectra. The at least two types of light-emitting units are distributed alternately, and adjacent light-emitting units of the same type are distributed in an inverted manner. All light-emitting units are dual-cup lamp beads, i.e., including two light-emitting elements of different colors.

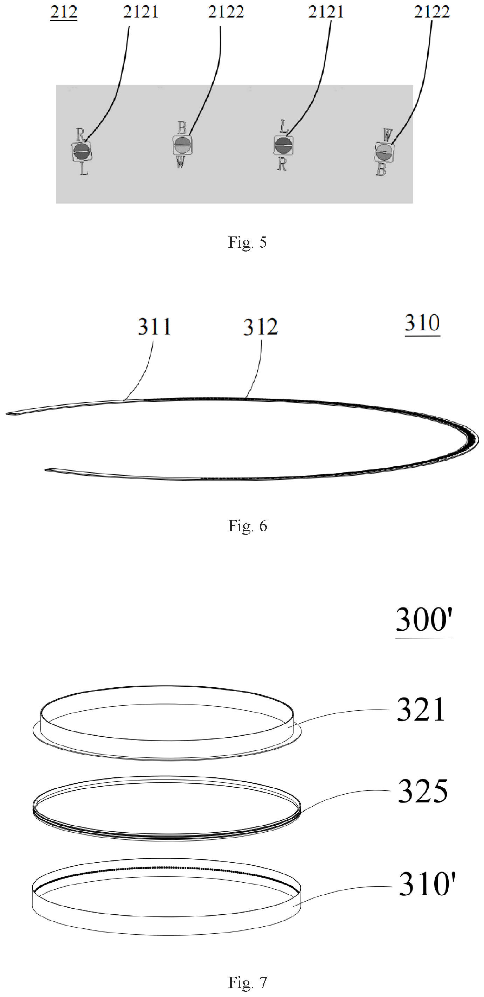

Referring to Fig. 5, in a preferred embodiment, each light-emitting module 212 on the first light-emitting module 210 includes a first light-emitting unit 2121 and a second light-emitting unit 2122. The first light-emitting unit 2121 and the second light-emitting unit 2122 are distributed alternately, and two adjacent first light-emitting units 2121/second light-emitting units 2122 are distributed in an inverted manner. The first light-emitting unit 2121 includes any two of four light-emitting elements of different colors, and the second light-emitting unit 2122 includes the remaining two light-emitting elements of different colors among the four light-emitting elements of different colors. In a single light-emitting module, the first light-emitting unit 2121, the second light-emitting unit 2122, the first light-emitting unit 2121 and the second light-emitting unit 2122 are arranged sequentially from left to right. The two different types of light-emitting units, namely the first light-emitting unit 2121 and the second light-emitting unit 2122, are distributed alternately, while adjacent first light-emitting units 2121 or second light-emitting units 2122 are distributed in an inverted manner. Through the four light-emitting elements of different colors, different lighting effects can be achieved. The alternate distribution of different types of light-emitting units and the inverted distribution of the same type of light-emitting units make the light color emitted by the surface light-emitting device 200 more uniform, capable of simulating the color of sunlight at different times and realizing the dynamic effect of light.

In this embodiment, each light-emitting module includes two first light-emitting units 2121 and two second light-emitting units 2122. In other embodiments, the count of first light-emitting units 2121 and second light-emitting units 2122 contained in the light-emitting module 212 may be more, and the present application does not limit thereto.

A light source lens (not shown) is sleeved on the light-emitting units of the light-emitting module. In this embodiment, a light source lens is installed on each light-emitting unit, i.e., the light source lenses and the light-emitting units are arranged in a one-to-one correspondence. Such an arrangement allows light emitted by the light-emitting units to concentrate to the center of the light source lens and then emit outward, avoiding mutual interference of light. In other embodiments, the light source lens may also be a two-in-one, four-in-one or other multi-in-one lens, so that a single light source lens can cover more light-emitting units, or a light source lens covering the entire light-emitting unit may be used, which can reduce the count of light source lenses and make production and assembly more convenient and efficient.

In this embodiment, the light-emitting units are arranged in a circular shape on the first substrate 211. Specifically, they are arranged in multiple concentric circles, and the count of light-emitting units in each circle is a multiple of 6, 7 or 8. The count of light-emitting units in each concentric circle is determined according to the voltage of the light-emitting units and the voltage of the driving power supply. In this embodiment, the voltage of the lamp bead 422 is 3V and the voltage of the driving power supply is 24V, so an 8-series mode is adopted, i.e., the count of light-emitting units in each concentric circle is a multiple of 8.

In this embodiment, there are Ri circles of light-emitting units on the first substrate 211, where i≥2. The count of light-emitting units in the R1 circle is N, the count in the R2 circle is 2N, and the count in the Ri circle is i*N. Assuming that the R1 circle is 1 string, marked as 1_1, the R2 circle is 2 strings, marked as 2_1 and 2_2, and so on, the Ri circle is marked as i_1 to i_i. There are i* (i+1) * (i+2)/6 strings in total, equivalent to adjustable i* (i+1) * (i+2)/6 light beams. Due to the four light-emitting elements of different colors, various color and brightness adjustments can be performed on 4*i*(i+1)*(i+2)/6 areas. Through precise control of the power of light-emitting units in different areas by the control system, continuous changes of light from morning to night can be realized.

In other embodiments, the light-emitting units may also be distributed in a zigzag shape or other shapes on the first substrate 211, and the present application does not limit thereto.

The surface light-emitting device 200 further includes an inner frame 250 and a diffusion structure 220. The inner frame 250 is sleeved in the frame 620, and the diffusion structure 220 is fixedly connected to an end of the inner frame 250 away from the first light-emitting module 210. Light emitted by the light-emitting units in the first light-emitting module 210 passes through the diffusion structure 220, which diffuses the light to convert a linear light source or a point light source into a uniform surface light source. In this embodiment, the diffusion structure 220 is a diffusion plate with a light transmittance of 40%-65% and a thickness of about 3mm.

The diffusion plate can well eliminate the graininess of light emitted by the first light-emitting module 210 and has the function of diffusing light, i.e., light is scattered on its surface to spread the light softly and uniformly. After being diffused by the diffusion plate, the light has a larger irradiation area, good light uniformity and stable chromaticity.

In some other embodiments, the diffusion structure 220 may also be a structural member with micro-structures. The structural member with micro-structures also covers the light-emitting module and can achieve a good light homogenization effect, and the present application does not limit thereto.

In some embodiments, the surface light-emitting device 200 further includes a transparent plate 240 fixedly connected to an end of the inner frame 250 away from the first light-emitting module 210. The transparent plate 240 is located on a side of the first light-exiting surface 201 away from the first light-emitting module 210, and a side of the transparent plate 240 away from the first light-exiting surface 201 is a mirror surface. At least part of light emitted by the side light-emitting device 300 is projected onto the transparent plate 240 after passing through the second light-exiting surface 301 and reflected by the transparent plate 240 to form a virtual image 303 matching the shape of the second light-exiting surface 301, simulating the window shadow effect formed on a window when one side of the window is illuminated by sunlight, giving a sense of depth and permeability to the human eye.

The light reflectivity of the mirror surface of the transparent plate 240 is higher than its light transmittance, thereby restricting external light from entering the transparent plate 240 from the light-exiting surface. Optionally, the transparent plate 240 may be made of an inorganic material, such as quartz glass. The transparent plate 240 may also be made of PMMA, PC and other materials, and the present application does not limit thereto.

In some embodiments, a very thin unidirectional film layer, such as tin, silver or aluminum, is plated on the light-exiting surface of the transparent plate 240 through a crystal plating process to form a unidirectional film layer. The crystal plating process can make the unidirectional film layer have high smoothness. In other embodiments, the transparent plate 240 may be selected according to actual conditions, which is not limited thereto. The thickness of the unidirectional film layer can be adjusted according to actual conditions. When the thickness of the unidirectional film layer increases, its reflectivity and transmittance will change. A one-way perspective effect is achieved by using a reflectivity higher than the transmittance.

Lighting effects of different modes such as morning glow and sunset can be realized by controlling the brightness changes of light-emitting units in different areas.

The side light-emitting device 300 is detachably connected to the lamp 100, arranged between the frame 620 and the surface light-emitting device 200 and surrounding the first light-exiting surface 201 of the surface light-emitting device 200. The side light-emitting device 300 extends along the light emission direction of the first light-emitting module 210. The side light-emitting device 300 has a second light-exiting surface 301 attached to a side of the frame 620 close to the first light-exiting surface 201. The side light-emitting device 300 further includes a second light-emitting module 310 horizontally located between the second light-exiting surface 301 and the frame 620. Light emitted by the second light-emitting module 310 is emitted in a direction away from the frame 620 after passing through the second light-exiting surface 301. The light emission mode of the side light-emitting device 300 is different from that of conventional ambient lamps. The side light-emitting device 300 only emits light toward the inner side of the lamp 100. In this embodiment, the frame 620 is made of opaque material, creating an effect that sunlight shines in and illuminates the window edge, forming a light-transmitting window visually.

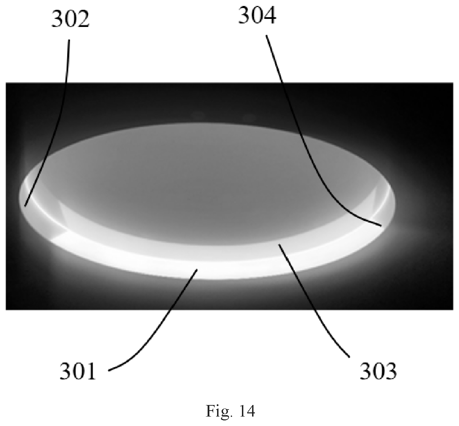

The side light-emitting device 300 further includes a non-light-exiting surface 302 also arranged away from the frame 620, and a light/shadow transition zone 304 is formed between the non-light-exiting surface 302 and the second light-exiting surface 301. As shown in Fig. 14, when simulating sunlight shining from one side to illuminate one side of the window and form a dark surface on the other side of the window, the display effect is more realistic. The second light-exiting surface 301 and the non-light-exiting surface 302 are circumferentially connected and jointly form an annular surface around the outer periphery of the first light-exiting surface 201. The light/shadow transition zone 304 is located at the junction of the second light-exiting surface 301 and the non-light-exiting surface 302. The light/shadow transition zone 304 functions to form a light-dark boundary area between the second light-exiting surface 301 and the non-light-exiting surface 302, which may be a continuously changing area from bright to dark or an obvious dividing line.

The side light-emitting device 300 includes a second substrate 311 surrounding the first light-exiting surface 201 and light-emitting elements 312 arranged on the second substrate 311. The light-emitting elements 312 are electrically connected through the second substrate 311. The second substrate 311 includes a light-emitting area arranged close to the second light-exiting surface 301 and a non-light-emitting area arranged away from the second light-exiting surface 301, so as to form an illuminated second light-exiting surface 301 and a non-illuminated non-light-exiting surface 302 on the outer periphery of the first light-exiting surface 201. Light-emitting elements 312 are arranged on the light-emitting area of the second substrate 311, and no light-emitting elements 312 need to be arranged on the non-light-emitting area.

Each light-emitting element 312 is one of an LED lamp bead and a dual-cup lamp bead, or a combination of both.

In some embodiments, the side light-emitting device 300 further includes a light shielding member 324 away from the second light-exiting surface 301. The second light-emitting module 310 and the light shielding member 324 jointly surround a side of the first light-exiting surface 201 close to the frame 620, so as to form an illuminated second light-exiting surface 301 and a non-illuminated non-light-exiting surface 302 on the outer periphery of the first light-exiting surface 201.

The side light-emitting device 300 can be integrally arranged to rotate and move relative to the surface light-emitting device 200. A micro-motor arranged in the lamp 100 drives the side light-emitting device 300 to rotate, so as to better simulate the effect of the sun rising in the east and setting in the west.

Three specific embodiments are used below to describe the side light-emitting device 300, but it should not be limited thereto.

### Embodiment 1

As shown in Figs. 2-3 and 6, in this embodiment, the light emission direction of the second light-emitting module 310 is the same as that of the first light-emitting module 210. The side light-emitting device 300 includes the second light-emitting module 310 and a light guide assembly 320. The light guide assembly 320 includes a light distribution member 322 and a light-emitting member 321. The light distribution member 322 is arranged below the second light-emitting module 310. The second light-emitting module 310 emits light toward the light distribution member 322 (i.e., the second light-emitting module 310 emits light in a direct-down manner). The light distribution member 322 is configured to refract light emitted from the second light-emitting module 310. The light-emitting member 321 is located on a side of the light distribution member 322 away from the frame 620. After being refracted by the light distribution member 322, light emitted from the light distribution member 322 is then emitted toward a side away from the frame 620 through the light-emitting member 321. The light distribution member 322 can control the emission angle of light, making light emit at a small angle with a long projection distance and stronger permeability.

A side of the light-emitting member 321 facing the first light-exiting surface 201 has a white diffuse reflection surface to enhance the visibility of the virtual image 303.

In some other embodiments, light emitted by the second light-emitting module 310 may also be vertically upward incident into the light guide assembly 320, and the present application does not limit thereto.

As shown in Fig. 6, the second light-emitting module 310 includes a second substrate 311 and light-emitting elements 312 installed on part of the area of the second substrate 311. When the light-emitting elements 312 on the second light-emitting module 310 emit light outward, areas of the light guide assembly 320 corresponding to the light-emitting elements 312 on the second substrate 311 are in a bright state (i.e., the second light-exiting surface 301 of the side light-emitting device 300), and areas of the light guide assembly 320 not corresponding to the light-emitting elements 312 on the second substrate 311 are in a dark state (i.e., the non-light-exiting surface 302 of the side light-emitting device 300), so as to simulate the effect of sunlight illuminating one edge of the window when shining into the room through the window.

In some other embodiments, light-emitting elements 312 may also be installed on all areas of the second substrate 311, and each light-emitting element 312 can be controlled independently. By controlling the working states of light-emitting elements 312 in different areas and lighting different positions to realize light source changes, the conversion between bright and dark areas on the light-emitting member 321 can be realized, simulating the effect of sunlight irradiating the skylight edge at different angles at different times of the day and realizing sunrise and sunset. In this embodiment, the frame 620 is made of semi-transparent or transparent material. By controlling the light-emitting colors of light-emitting elements 312 in different areas to be different, a rainbow effect can be formed through the frame 620, improving the visual experience of the lamp 100.

In some embodiments, both the light distribution member 322 and the light-emitting member 321 have micro-structures.

Preferably, the light distribution member 322 and the light-emitting member 321 are made of transparent optical materials such as PMMA and PC.

Light emitted after passing through the light distribution member 322 passes through the light-emitting member 321. The light-emitting member 321 can eliminate the graininess of light emitted by the second light-emitting module 310, and light emitted after passing through the light-emitting member 321 is more uniform.

A reflection member 323 is attached to a side of the light distribution member 322 away from the light-emitting member 321 to reflect light irradiating this area back, making all light emit toward the light-emitting member 321 and improving light concentration.

A part of the light-emitting member 321 not covered by the light distribution member 322 is covered with a light shielding member 324. The light shielding member 324 arranged here can prevent light from leaking from this part of the light-emitting member 321. The light shielding member 324 is configured to form the non-light-exiting surface 302 of the side light-emitting device 300, ensuring that this part of the light-emitting member 321 is in a dark state and simulating the effect of real sunlight irradiating the window edge or skylight edge.

In some other embodiments, the light shielding member 324 can rotate around the light distribution member 322. When light-emitting elements 312 are installed on all areas of the second substrate 311, the rotation of the light shielding member 324 realizes changes in bright and dark areas on the light-emitting member 321.

The height of the light shielding member 324 can be adjusted according to actual conditions through a micro-motor matched with an elastic member.

### Embodiment 2

As shown in Figs. 7-8, in this embodiment, the light emission direction of the second light-emitting module 310' intersects with that of the first light-emitting module 210. The side light-emitting device 300 includes a light-emitting member 321 arranged between the frame 620 and the first light-exiting surface 201 and extending beyond the first light-exiting surface 201 along the extension direction of the frame 620. The second light-emitting module 310' is arranged on a side of the light-emitting member 321 facing the frame 620. The second light-emitting module 310' includes an annular second substrate 311' and light-emitting elements 312 installed on the inner side of the substrate. The second light-emitting module 310' emits light toward the light-emitting member 321, and the emitted light directly enters the light-emitting member 321 from the side of the light-emitting member 321.

The side light-emitting device 300' further includes an annular lens 325 located between the light-emitting member 321 and the second light-emitting module 310'. The annular lens 325 is connected to the inner side of the second substrate 311' and covers the light-emitting elements 312. Light emitted by the light-emitting elements 312 is incident on the light incident surface of the annular lens 325, refracted on the light incident surface, enters the annular lens 325 under the condition of satisfying Snell's law, then refracted on the light exit surface, and after exiting the annular lens 325, passes through the light-emitting member 321 to realize uniform light emission.

In this embodiment, the second substrate 311' can be a flexible printed circuit (FPC). In other embodiments, the second substrate 311' may also be made of other materials.

Preferably, the light-emitting member 321 is made of transparent optical materials such as PMMA and PC.

In some other embodiments, light-emitting elements 312 may also be installed on all areas of the second substrate 311', and the second substrate 311' is divided into multiple light-emitting areas, each including multiple light-emitting elements 312. Each light-emitting area can be independently controlled for lighting. By controlling the working states of different light-emitting areas, the conversion between bright and dark areas on the light-emitting member 321 can be realized, simulating the effect of sunlight irradiating the skylight edge at different angles at different times of the day.

In some other embodiments, when light-emitting elements 312 are installed on all areas of the second substrate 311', a light shielding member 324 may also be attached to part of the light-emitting member 321 to prevent light from leaking from this part of the light-emitting member 321, making this part of the light-emitting member 321 in a dark state and simulating the effect of real sunlight irradiating the window edge or skylight edge. The light shielding plate can rotate, and the rotation of the light shielding member 324 realizes changes in bright areas on the light-emitting member 321, simulating the effect of sunrise and sunset.

The overall structure of the side light-emitting device 300 in this embodiment is simpler, and the second light-emitting module 310' surrounds the outer side of the light-emitting member 321, making assembly more convenient and efficient.

### Embodiment 3

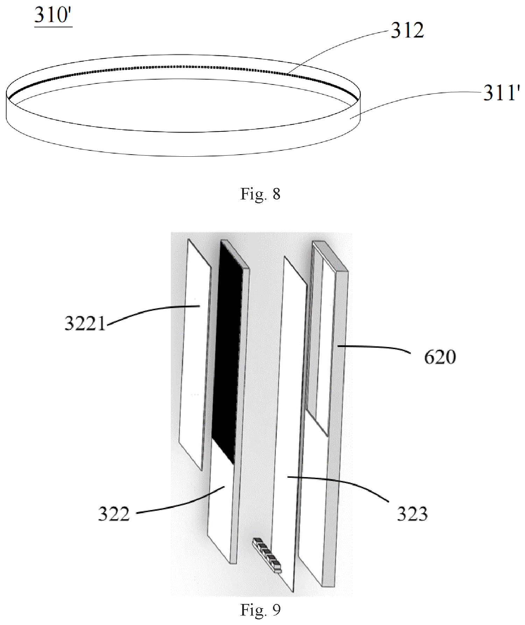

In this embodiment, the structure of the side light-emitting device 300 is basically the same as that of Embodiment 1. The side light-emitting device 300 only emits light toward a side away from the frame 620. The light guide assembly 320 includes a light-emitting member 321 and a light distribution member 322. The second light-emitting module 310 is fixedly connected to one end of the light-emitting member 321, and the light distribution member 322 surrounds the outer side of the light-emitting member 321. The upper end surface of the light distribution member 322 covers the light-emitting elements 312 on the second light-emitting module 310. The difference is that, as shown in Fig. 9, the light distribution member 322 in this embodiment is provided with a V-prism micro-structure 3221 located in an area of the light distribution member 322 away from the second light-emitting module 310. The light-emitting member 321 is an inverted V-prism micro-structure. After light is emitted from the light-emitting elements 312, the V-prism micro-structure 3221 on the light distribution member 322 destroys its total reflection, making light emit from the area of the light distribution member 322 provided with the V-prism micro-structure 3221 at a large angle. Light emitted from the light distribution member 322 enters the light-emitting member 321 with the inverted V-prism micro-structure. Using the inverted V-prism micro-structure 3221, part of the light can be emitted onto the transparent plate 240 at a small angle and reflected to form a transparent virtual image 303 of the second light-exiting surface 301.

The angles of the backlight surface and the incident surface of the V-prism micro-structure 3221 at the bottom of the light distribution member 322 are both less than 6 degrees. Meanwhile, the angles change with the distance between the light-emitting elements 312 and the light incident side of the light distribution member 322, and the depth of a V-groove also changes. With an incident surface less than 6 degrees, after light enters from the light incident side, it exits from the light exit surface in a direction of 165 degrees to 175 degrees. The V-prism micro-structure 3221 on the light exit side compresses the light to within 30 degrees toward the center. The light of 165 degrees to 175 degrees emitted can realize small-angle emission through the inverted V-prism on the light-emitting member 321, with an emission angle less than 10 degrees. The uniformity of the light exit surface of the light distribution member 322 can be adjusted by adjusting the angles of the incident surface and the backlight surface and the depth of the V-groove.

Preferably, the angles of the backlight surface and the incident surface of the V-prism in the light distribution member 322 are both between 0.25 degrees and 0.75 degrees, and the vertex angle of the inverted V-prism in the light-emitting member 321 is between 55 degrees and 70 degrees.

A side of the light distribution member 322 away from the light-emitting member 321 is covered with a reflection member 323 to reflect light irradiating this area inside the light distribution member 322, making all light in the light distribution member 322 emit toward the light-emitting member 321.

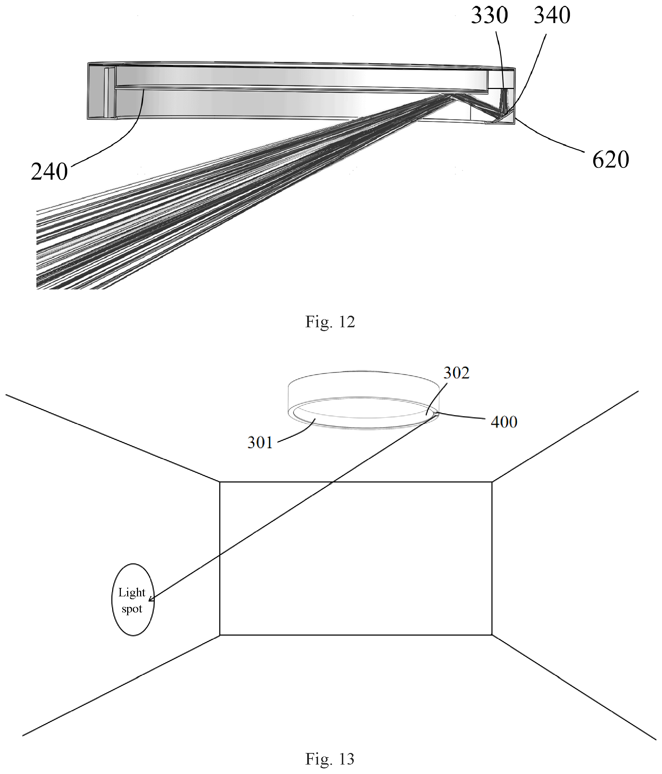

As shown in Fig. 12, the lamp 100 is further provided with a side projection device 330 arranged between the frame 620 and the surface light-emitting device 200. The side projection device 330 is configured to project a sun-like light spot. The sun-like light spot projected by the side projection device 330 enters the mirror surface of the transparent plate 240 and then emits outward after being reflected by the mirror surface, forming a virtual sunlight spot in the first light-exiting surface 201. The human eye can see the scene of sunlight shining down through the transparent plate 240, making the display effect of the lamp 100 more realistic. The human eye can see the reflected virtual image in the first light-exiting surface 201, making the display effect of the lamp 100 more realistic.

The lamp 100 further includes one or more reflection devices 340 arranged in the light emission direction of the side projection device 330. Light projected by the side projection device 330 is reflected once or multiple times by the reflection devices 340 and then enters the mirror surface of the transparent plate 240. In this embodiment, the reflection devices 340 are reflectors, which can be flat, spherical, aspherical or free-form surfaces. When the reflector is spherical or aspherical, it can magnify or reduce the light spot projected by the side projection device 330. A free-form surface reflector can not only magnify or reduce the light spot but also eliminate aberration problems such as distortion and astigmatism, and also change the image distance, making the sun seen by the human eye more distant and increasing the sense of reality.

The side projection device 330 includes projection lamp beads and convex lenses. The projection lamp beads are multi-color lamp beads to simulate the sun color temperature at different times. The convex lenses are Fresnel lenses or fly-eye lenses, which condense light emitted by the projection lamp beads to obtain uniform light spots.

The lamp 100 further includes a projection system 400 arranged between the frame 620 and the side light-emitting device 300 and at least partially exposed outside the frame 620. The projection system 400 is configured to project sun-like light spots on the wall or ground, including circular, oval or quadrilateral light spots, similar to projections produced by sunlight passing through a window.

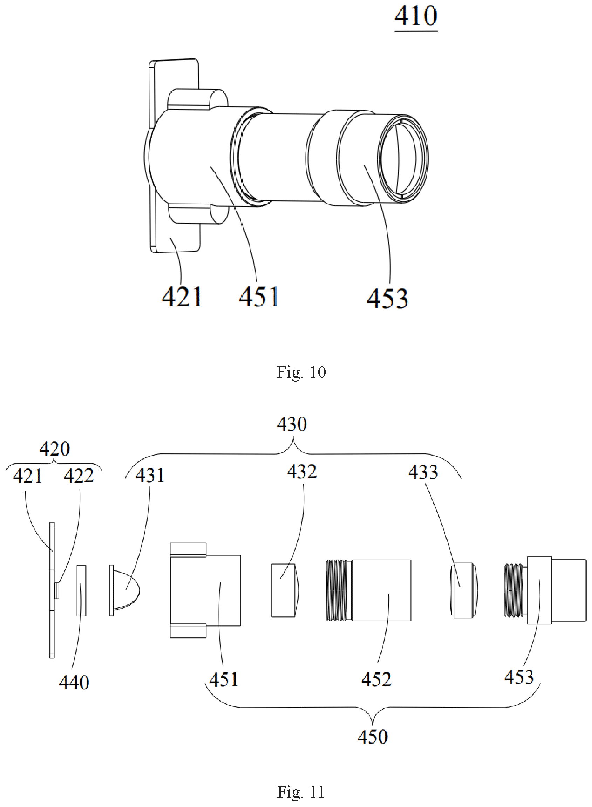

The projection system 400 includes a plurality of projection devices 410. In this embodiment, two projection devices 410 are provided, and each of the two projection devices 410 is movably connected to the frame 620 of the lamp 100 through a connecting piece. The projection devices 410 can rotate relative to the frame 620. As shown in Figs. 10-11, the projection device 410 includes a light-emitting assembly 420, a lens barrel assembly 450 and a lens module 430. The light-emitting assembly 420 includes an aluminum substrate 421 and lamp beads 422 installed on the aluminum substrate 421. A diaphragm 440 is sleeved outside the lamp beads 422 and abuts against the aluminum substrate 421. The diaphragm 440 is configured to control the intensity and shape of the light beam emitted by the lamp beads 422. An end of the diaphragm 440 away from the lamp beads 422 is connected with a first lens 431 configured to form a light spot. A first lens barrel 451 is sleeved outside the diaphragm 440 and the first lens 431. A second lens barrel 452 is screwed to an end of the first lens barrel 451 away from the first lens 431. A second lens 432 is embedded in a side of the second lens barrel 452 close to the first lens barrel 451. An end of the second lens barrel 452 away from the first lens barrel 451 is screwed to a third lens barrel 453. A third lens 433 is embedded in an end of the third lens barrel 453 away from the second lens barrel 452. The second lens 432 and the third lens 433 are configured for imaging. The focal length is adjusted by the first lens barrel 451, the second lens barrel 452 and the third lens barrel 453.

The first lens 431 and the second lens 432 are plastic lenses, and the third lens 433 is a glass lens. Plastic lenses are lighter, beneficial to the lightweight of the overall structure, while glass lenses can ensure higher light transmittance.

In this embodiment, the lamp beads 422 are LED lamp beads. In other embodiments, other types of lamp beads may also be used, and the present application does not limit thereto.

As shown in Fig. 13, the projection direction of the projection system 400 is consistent with the direction of the second light-exiting surface 301, projecting a light spot on the wall on one side of this area to simulate the projection produced by real sunlight shining through a window on the wall in the real sunlight irradiation direction.

The surface light-emitting lamp 100 further includes a control system that controls the operation of the surface light-emitting device 200, the side light-emitting device 300 and the projection system 400 to realize lighting effects in multiple scenarios.

The mounting system 500 includes a mounting bracket fixedly connected to the bottom wall 610. The lamp 100 is fixed to the mounting surface through the mounting bracket. In this embodiment, the mounting system 500 is a hanger-type structure. In other embodiments, it may also be a quick-connect structure, and the present application does not limit thereto.

In summary, the surface light-emitting device 200 in the lamp 100 of the present application can simulate effects such as blue sky, sunset, morning light and blue sky with white clouds, and the side light-emitting device 300 simulates the effect of sunlight irradiating the window edge, making the lighting effect of the lamp 100 more realistic. The side light-emitting device 300 can also form a virtual image 303 on the transparent plate 240 arranged therein, producing a window shadow effect similar to sunlight irradiating the window or skylight edge, thereby forming a sense of space, depth and layering. The projection system 400 can provide light spots similar to sunlight projecting onto the ground or wall through a window or skylight, and the shape of the light spots changes according to the overall shape of the lamp 100, enabling multi-scenario applications.

The above embodiments are only used to illustrate the technical solutions of the present application rather than limit them. Although the present application has been described in detail with reference to preferred embodiments, those of ordinary skill in the art should understand that modifications or equivalent replacements can be made to the technical solutions of the present application without departing from the spirit and scope of the technical solutions of the present application.

## Claims

1. A lamp, comprising:
a housing (600), comprising a bottom wall (610) and a frame (620) extending from the bottom wall (610) in a direction away from the bottom wall (610), a light outlet being formed between the bottom wall (610) and the frame (620);
a surface light-emitting device (200), disposed on the bottom wall (610) and surrounded by the frame (620), having a first light-exiting surface (201) arranged at the light outlet, wherein the surface light-emitting device (200) comprises a first light-emitting module (210), and light emitted by the first light-emitting module (210) is emitted through the first light-exiting surface (201), a side of the first light-exiting surface (201) facing the light outlet is a mirror surface, and the first light-exiting surface (201) is configured to emit light outward and reflect light.

2. The lamp according to claim 1, wherein the lamp further has a second light-exiting surface (301) surrounding the first light-exiting surface (201) and located inside the frame (620), and the second light-exiting surface (301) is configured to emit light outward and/or reflect light emitted by the first light-exiting surface (201).

3. The lamp according to claim 2, wherein the light emitted and/or reflected by the second light-exiting surface (301) is at least partially projected onto the mirror surface, forming a virtual image (303) matching a shape of the second light-exiting surface (301) in the mirror surface.

4. The lamp according to claim 2, wherein the lamp further comprises a side light-emitting device (300) surrounding the surface light-emitting device (200), wherein the side light-emitting device (300) extends along a light emission direction of the first light-emitting module (210);
the side light-emitting device (300) comprises a second light-emitting module (310) and the second light-exiting surface (301) surrounding the first light-exiting surface (201) and located inside the frame (620), wherein light emitted by the second light-emitting module (310) is emitted in a direction away from the frame (620) after passing through the second light-exiting surface (301), with a part of the light irradiating the mirror surface.

5. The lamp according to claim 4, wherein the side light-emitting device (300) further comprises a light-emitting member (321) disposed between the second light-emitting module (310) and the first light-exiting surface (201), and surrounding the first light-exiting surface (201), wherein a side of the light-emitting member (321) facing the first light-exiting surface (201) has a white diffuse reflection surface.

6. The lamp according to claim 1, wherein the surface light-emitting device (200) comprises a transparent plate (240) located on a side of the first light-emitting module (210) away from the bottom wall (610), and the mirror surface is located on a side of the transparent plate (240) away from the first light-emitting module (210).

7. The lamp according to claim 6, wherein the transparent plate (240) is made of any one of PMMA, PC or glass, the mirror surface on the transparent plate (240) is formed by a unidirectional film layer attached to the transparent plate (240), and the unidirectional film layer is made of tin, silver or aluminum, a light reflectivity of the mirror surface is higher than a light transmittance of the mirror surface.

8. The lamp according to claim 2, wherein the lamp further comprises a non-light-exiting surface (302) adjacent to the second light-exiting surface (301), and the non-light-exiting surface (302) and the second light-exiting surface (301) are arranged circumferentially around the first light-exiting surface (201).

9. The lamp according to claim 6, wherein the lamp further comprises a side projection device (330) disposed between the frame (620) and the surface light-emitting device (200), and the side projection device (330) is configured to project a sun-like light spot onto the mirror surface.

10. The lamp according to claim 9, wherein the lamp further comprises at least one reflection device (340) located in a light emission direction of the side projection device (330), wherein the sun-like light spot projected by the side projection device (330) is reflected by the reflection device (340) and then enters the mirror surface.
